# EUROPEAN PATENT APPLICATION

(11) **EP 4 145 954 A1**
(43) Date of publication of application: **08.03.2023**
(21) Application number: 21795807.3
(22) Date of filing: 29.04.2021
(51) Int. Cl.: H04W 88/04, H04W 4/90, H04W 76/27

(54) **STATE INDICATION METHOD, DEVICE, AND SYSTEM**

(30) Priority: 30.04.2020 CN 202010368380
(71) Applicant: Vivo Mobile Communication Co., Ltd., Dongguan, Guangdong 523863 (CN)
(72) Inventor: WANG, Wen, Dongguan, Guangdong 523863 (CN); XIE, Zhenhua, Dongguan, Guangdong 523863 (CN); KE, Xiaowan, Dongguan, Guangdong 523863 (CN); ZHANG, Yanxia, Dongguan, Guangdong 523863 (CN)
(74) Representative: Conti, Marco
(86) International application number: PCT/CN2021/091179
(87) International publication number: WO 2021/219103

(57) **Abstract**

Embodiments of the present application provide a state indication method, a device, and a system. The method comprises: a relay core network device receives first state indication information sent by a first device, the first state indication information comprising at least one of first indication information and second indication information, the first indication information instructing a relay UE to perform UE-to-network relay communication, the second indication information instructing the relay UE to perform UE-to-network relay communication for an emergency service, and the first state indication information being used for determining not to initiate a NAS signaling connection release process of the relay UE.

## Description

### CROSS-REFERENCE TO RELATED APPLICATIONS

This application claims priority to Chinese Patent Application No. 202010368380.X, filed in China on April 30, 2020, which is incorporated herein by reference in its entirety.

### TECHNICAL FIELD

Embodiments of this application relate to the field of communication technologies, and in particular, to a state indication method, a device, and a system.

### BACKGROUND

To increase the coverage rate of public safety services, user equipment (user equipment, UE) to network relay (UE-to-network relay) connection is introduced into communication systems. The UE-to-network relay connection may be established in a layer-2 (layer-2) manner or a layer-3 (layer-3) manner.

For example, in the layer-2 manner, a communication link of the UE-to-network relay connection may be remote (remote) UE-relay (relay) UE-radio access network (radio access network, RAN)-remote access and mobility management function (access and mobility management function, AMF) entity. The relay UE can provide service for the remote UE.

However, in a case that the relay UE provides service for the remote UE, because a relay AMF entity is unable to learn of a communication state of the relay UE, for example, unable to learn whether the relay UE has established a UE-to-network relay connection or whether it is processing a UE-to-network relay service, the relay AMF entity may initiate a release procedure of a non-access stratum (non-access stratum, NAS) signaling connection of the relay UE. As a result, the relay UE enters an idle state (idle state), causing service interruption of the remote UE.

### SUMMARY

An objective of embodiments of this application is to provide a state indication method, a device, and a system to solve the problem that a relay AMF entity is unable to learn of a communication state of relay UE and initiates a release procedure of a NAS signaling connection of the relay UE, which causes service interruption of remote UE.

To solve the foregoing technical problem, this application is implemented as follows:

According to a first aspect, an embodiment of this application provides a state indication method, where the method includes: receiving, by a relay core network device, first state indication information transmitted by a first device, where the first state indication information includes at least one of first indication information and second indication information, the first indication information indicates that relay UE is performing UE-to-network relay communication, and the second indication information indicates that the relay UE is performing UE-to-network relay communication for an emergency service, where the first state indication information is used for determining that a release procedure of a NAS signaling connection of the relay UE is not to be initiated.

According to a second aspect, an embodiment of this application provides a state indication method, where the method includes: transmitting, by a first device, first state indication information to a relay core network device, where the first state indication information includes at least one of first indication information and second indication information, the first indication information indicates that relay UE is performing UE-to-network relay communication, and the second indication information indicates that the relay UE is performing UE-to-network relay communication for an emergency service, where the first state indication information is used for determining that a release procedure of a NAS signaling connection of the relay UE is not to be initiated.

According to a third aspect, an embodiment of this application provides a core network device, where the core network device is a relay core network device, and the core network device includes a receiving module. The receiving module is configured to receive first state indication information transmitted by a first device, where the first state indication information includes at least one of first indication information and second indication information, the first indication information indicates that relay UE is performing UE-to-network relay communication, and the second indication information indicates that the relay UE is performing UE-to-network relay communication for an emergency service, where the first state indication information is used for determining that a release procedure of a NAS signaling connection of the relay UE is not to be initiated.

According to a fourth aspect, an embodiment of this application provides a device, where the device is a first device, and the first device includes a transmitting unit. The transmitting unit is configured to transmit first state indication information to a relay core network device, where the first state indication information includes at least one of first indication information and second indication information, the first indication information indicates that relay UE is performing UE-to-network relay communication, and the second indication information indicates that the relay UE is performing UE-to-network relay communication for an emergency service, where the first state indication information is used for determining that a release procedure of a NAS signaling connection of the relay UE is not to be initiated.

According to a fifth aspect, an embodiment of this application provides a core network device, including a processor, a memory, and a program or instructions stored in the memory and capable of running on the processor, where when the program or instructions are executed by the processor, the steps of the state indication method provided in the first aspect are implemented.

According to a sixth aspect, an embodiment of this application provides a device, including a processor, a memory, and a program or instructions stored in the memory and capable of running on the processor, where when the program or instructions are executed by the processor, the steps of the state indication method provided in the second aspect are implemented.

According to a seventh aspect, an embodiment of this application provides a communication system. The communication system includes the core network device in the third aspect and the device in the fourth aspect. Alternatively, the communication system includes the core network device in the fifth aspect and the device in the sixth aspect.

According to an eighth aspect, an embodiment of this application provides a readable storage medium, where the readable storage medium stores a program or instructions, and when the program or instructions are executed by a processor, the steps of the state indication method in the first aspect or the second aspect are implemented.

According to a ninth aspect, an embodiment of this application provides a chip, where the chip includes a processor and a communication interface, the communication interface is coupled to the processor, and the processor is configured to run a program or instructions to implement the steps of the state indication method in the first aspect or the second aspect

In the embodiments of this application, a relay core network device may receive first state indication information transmitted by a first device, where the first state indication information includes at least one of first indication information and second indication information, the first indication information indicates that relay UE is performing UE-to-network relay communication, and the second indication information indicates that the relay UE is performing UE-to-network relay communication for an emergency service, where the first state indication information is used for determining that a NAS signaling connection release procedure is not be initiated for the relay UE. With this solution, because the first indication information may indicate that the relay UE is performing UE-to-network relay communication and the second indication information may indicate that the relay UE is performing UE-to-network relay communication for an emergency service, after the core network device receives the first state indication information (including the first indication information and/or the second indication information), the core network device can determine that the relay UE is providing service for remote UE, and therefore the core network device may determine not to initiate a release procedure of a NAS signaling connection of the relay UE, that is, to retain a NAS signaling connection for the relay UE so that the relay UE can remain in a connected state. This can avoid service interruption of the remote UE, ensuring proper operating of services of the remote UE.

### BRIEF DESCRIPTION OF THE DRAWINGS

FIG. 1 is a schematic diagram of an architecture of a communication system according to an embodiment of this application;
FIG. 2 is a schematic flowchart of a state indication method according to an embodiment of this application;
FIG. 3 is a first schematic flowchart of application of a state indication method according to an embodiment of this application;
FIG. 4 is a second schematic flowchart of application of a state indication method according to an embodiment of this application;
FIG. 5 is a third schematic flowchart of application of a state indication method according to an embodiment of this application;
FIG. 6 is a fourth schematic flowchart of application of a state indication method according to an embodiment of this application;
FIG. 7 is a fifth schematic flowchart of application of a state indication method according to an embodiment of this application;
FIG. 8 is a schematic structural diagram of a core network device according to an embodiment of this application;
FIG. 9 is a schematic diagram of hardware of a device according to an embodiment of this application;
FIG. 10 is a schematic structural diagram of a first device according to an embodiment of this application; and
FIG. 11 is a schematic diagram of hardware of UE according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein. In addition, in the specification and claims, "and/or" represents at least one of connected objects, and the character "/" typically represents an "or" relationship between the associated objects.

In the embodiments of this application, the word such as "an example" or "for example" is used to represent an example, an instance, or an illustration. Any embodiment or design scheme described as "an example" or "for example" in the embodiments of this application should not be construed as being more preferred or advantageous than other embodiments or design schemes. To be precise, the words such as "an example" or "for example" are intended to present a related concept in a specific manner.

In the description of the embodiments of this application, unless otherwise specified, the meaning of "plurality" means two or more than two. For example, a plurality of core network devices indicate two or more than two core network devices.

Some terms/nouns included in the embodiments of this application are described below.

Relay core network device: a core network device that serves UE-to-network relay in UE-to-network relay communication, for example, a relay AMF entity.

Relay UE (that is, relay UE): UE that implements communication between the remote UE and an access network device as a relay device of remote UE (remote UE) in UE-to-network relay communication, that is, UE-to-network relay UE in UE-to-network relay communication.

Remote core network device: a core network device that serves remote UE in UE-to-network relay communication, for example, a remote AMF entity.

Remote UE (that is, remote UE): UE that needs relaying by relay UE to communicate with an access network device in UE-to-network relay communication.

Access network device of relay UE: an access network device that serves UE-to-network relay UE in UE-to-network relay communication, for example, a 5G system node base (gNB) and an evolved NodeB (evolved NodeB, eNB).

The embodiments of this application provide a state indication method, a device, and a system. A relay core network device may receive first state indication information transmitted by a first device, where the first state indication information includes at least one of first indication information and second indication information, the first indication information indicates that relay UE is performing UE-to-network relay communication, and the second indication information indicates that the relay UE is performing UE-to-network relay communication for an emergency service, where the first state indication information is used for determining that a release procedure of a NAS signaling connection of the relay UE is not to be initiated. With this solution, because the first indication information may indicate that the relay UE is performing UE-to-network relay communication and the second indication information may indicate that the relay UE is performing UE-to-network relay communication for an emergency service, after the core network device receives the first state indication information (including the first indication information and/or the second indication information), the core network device can determine that the relay UE is providing service for remote UE, and therefore the core network device may determine not to initiate a release procedure of a NAS signaling connection of the relay UE, that is, to retain a NAS signaling connection for the relay UE so that the relay UE can remain in a connected state. This can avoid service interruption of the remote UE, ensuring proper operating of services of the remote UE.

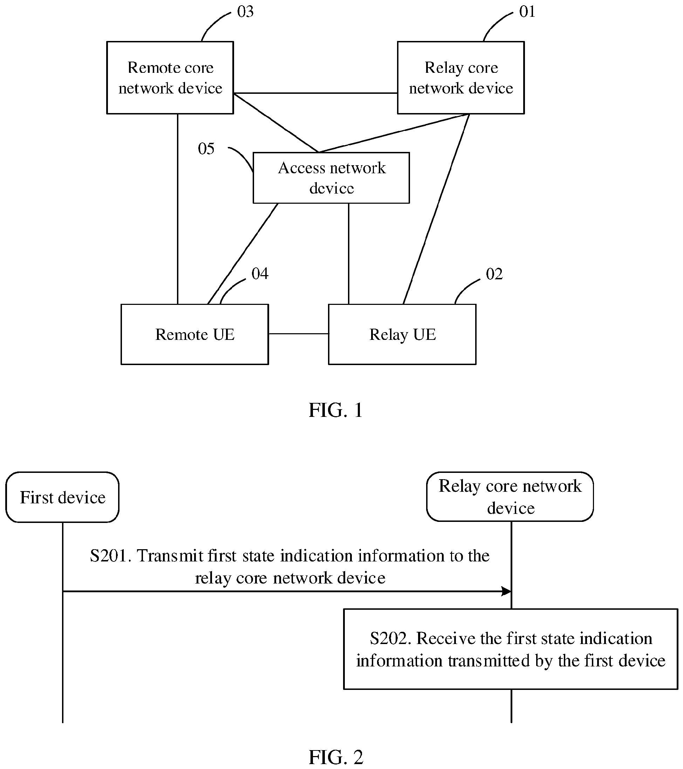

FIG. 1 is a schematic diagram of an architecture of a communication system according to an embodiment of this application. As shown in FIG. 1, the communication system may include a relay core network device 01, relay UE 02, a remote core network device 03, remote UE 04, and an access network device 05. The remote UE 04 may communicate with the access network device 05 via the relay UE 02.

The relay UE 02 may be UE having a relay capability or other devices having a relay capability, for example, a road side unit (road side unit, RSU).

It should be noted that, in this embodiment of this application, connection between the devices shown in FIG. 1 may be wireless or wired.

The UE is a device that provides a user with voice and/or data connectivity, a handheld device with a wired/wireless connection function, or another processing device connected to a wireless modem. The UE may communicate with one or more core network devices through a radio access network (radio access network, RAN). The UE may be a mobile terminal such as a mobile phone (or referred to as "cellular" phone) and a computer having a mobile terminal, such as a portable, pocket-sized, handheld, computer built-in, or in-vehicle mobile apparatus, which exchanges voice and/or data with the RAN; or may be a device such as a personal communication service (personal communication service, PCS) phone, a cordless phone, a session initiation protocol (SIP) phone, a wireless local loop (wireless local loop, WLL) station, or a personal digital assistant (personal digital assistant, PDA). The UE may alternatively be referred to as a user agent (user agent), a terminal device, or the like.

The access network device is a device deployed in the RAN and configured to provide a wireless communication function for the UE. In this embodiment of this application, the access network device may be a base station, and the base station may include various forms, such as a macro base station, a micro base station, a relay station, and an access point. Names of devices having functions of the base station may vary in systems using different radio access technologies. For example, such device may be referred to as a 5G system node base (gNB) in a fifth-generation (5-generation, 5G) wireless communication system, may be referred to as an evolved NodeB (eNB) in a fourth-generation (4-generation, 4G) wireless communication system, such as a long term evolution (long term evolution, LTE) system, or may be referred to as a node base (NodeB) in a third-generation (3-generation, 3G) mobile communication system. With evolution of the communication technologies, the name "base station" may change.

The core network device may be a core-network network element located at a network side, for example, an AMF entity or a policy control function (Policy Control Function, PCF) entity.

The following uses specific embodiments and application scenarios thereof as examples for description of the state indication method provided in the embodiments of this application with reference to the accompanying drawings.

As shown in FIG. 2, an embodiment of this application provides a state indication method. The method may be applied to the wireless communication system shown in FIG. 1 and may include the following steps S201 and S202.

S201. A first device transmits first state indication information to a relay core network device.

The first state indication information may include at least one of first indication information and second indication. The first indication information may indicate that relay UE is performing UE-to-network relay communication. The second indication information may indicate that the relay UE is performing UE-to-network relay communication for an emergency service.

It should be noted that, in this embodiment of this application, that "the relay UE is performing UE-to-network relay communication" may be used to indicate that the relay UE is performing UE-to-network relay communication for a general service.

S202. The relay core network device receives the first state indication information transmitted by the first device.

The first state indication information may be used for determining that a release procedure of a NAS signaling connection of the relay UE is not to be initiated.

In this embodiment of this application, the first device may transmit the first state indication information to the relay core network device to notify the relay core network device that the relay UE is performing UE-to-network relay communication and/or the relay UE is performing UE-to-network relay communication for an emergency service. In this way, after receiving the first state indication information, the relay core network device may not initiate a release procedure of a NAS signaling connection of the relay UE, or should not (should not) initiate a release procedure of a NAS signaling connection of the relay UE.

Optionally, in this embodiment of this application, the first device may be any one of the following devices: the relay UE, a remote core network device, and an access network device of the relay UE.

Optionally, in this embodiment of this application, when the first device varies, content specifically indicated by the first state indication information may vary. Specifically, when the first device is the relay UE or an access network device of the relay UE, the first state indication information may indicate that the relay UE is performing UE-to-network relay communication and/or UE-to-network relay communication for an emergency service; or when the first device is a remote core network device, the first state indication information may indicate that the relay UE and remote UE (for example, first remote UE in this embodiment of this application) are performing UE-to-network relay communication and/or UE-to-network relay communication for an emergency service.

In other words, when the first device is the relay UE or an access network device of the relay UE, the first state indication information is general state indication information that indicates a communication state of the relay LTE; or in a case that the first device is a remote core network device, the first state indication information is specific state indication information that indicates a state of communication between the relay UE and the remote UE (for example, the first remote UE).

In this embodiment of this application, when the first device varies, an occasion at which the first device transmits the first state indication information to the relay core network device may vary.

Optionally, in this embodiment of this application, when the first device is the relay UE, the relay UE may transmit the first state indication information to the relay core network device when the relay UE receives a non-direct establishment request or a direct establishment request from the remote UE; or the relay UE may transmit the first state indication information to the relay core network device in a case that the relay UE and the remote UE have established a UE-to-network relay connection (which may also be referred to as that the relay UE already has a UE-to-network relay connection).

It should be noted that, in this embodiment of this application, both the non-direct establishment request and the direct establishment request may be used to indicate that the remote UE is requesting to establish a UE-to-network relay connection to the relay UE. This may be specifically determined depending on an actual use requirement and is not limited in this embodiment of this application.

Optionally, in this embodiment of this application, the non-direct establishment request (or the direct establishment request) may include indication information of an emergency connection or an emergency service type, so as to indicate that the remote UE is requesting to establish a UE-to-network relay connection for an emergency service with the relay UE.

Optionally, in this embodiment of this application, when the first device is a remote core network device, the remote core network device may transmit the first state indication information to the relay core network device after the remote UE has established a UE-to-network relay connection to the relay UE.

Optionally, in this embodiment of this application, when the first device is an access network device of the relay UE, the access network device of the relay UE may transmit the first state indication information to the relay core network device in a process in which the relay UE is establishing a UE-to-network relay connection to the remote UE; or the access network device of the relay UE may transmit the first state indication information to the relay core network device in a case that the relay UE already has a UE-to-network relay connection.

Optionally, in this embodiment of this application, when the first state indication information includes only the first indication information (indicating that the relay UE is performing UE-to-network relay communication), the relay core network device determines that the relay core network device does not initiate (or should not initiate) a release procedure of a NAS signaling connection of the relay UE unless the relay core network device encounters NAS congestion (congestion) or the like.

Optionally, in this embodiment of this application, when the first state indication information includes only the second indication information (indicating that the relay UE is performing UE-to-network relay communication for an emergency service) or when the first state indication information includes the first indication information and the second indication information, the relay core network device determines that a NAS signaling connection release procedure is not to be initiated (or should not be initiated) for the relay UE.

Optionally, in this embodiment of this application, when the first state indication information includes the first indication information and the second indication information, the first indication information and the second indication information may be two pieces of separate indication information or one piece of independent indication. This may be specifically determined depending on an actual use requirement and is not limited in this embodiment of this application.

Optionally, in this embodiment of this application, the first state indication information may be carried in a NAS request message, a NAS reject message, an N2 interface message, or a RAN reject message.

Optionally, in this embodiment of this application, the NAS request message may be a conventional NAS request message, a new type of NAS request message (for example, a newly designed NAS request message), or a dedicated NAS request message capable of carrying the first state indication information. This may be specifically determined depending on an actual use requirement and is not limited in this embodiment of this application.

In this embodiment of this application, when the first device varies, the first state indication information may be carried in different messages.

For example, when the first device is the relay UE, the first state indication information may be carried in a NAS request message or a NAS reject message; when the first device is a remote core network device, the first state indication information may be carried in a NAS request message; or when the first device is an access network device of the relay UE, the first state indication information may be carried in an N2 interface message or a RAN reject message.

According to the state indication method provided in this embodiment of this application, because the first indication information may indicate that the relay UE is performing UE-to-network relay communication and the second indication information may indicate that the relay UE is performing UE-to-network relay communication for an emergency service, after receiving the first state indication information (including the first indication information and/or the second indication information), the core network device can determine that the relay UE is providing service for the remote UE, and therefore the core network device may determine not to initiate a release procedure of a NAS signaling connection of the relay UE, that is, to retain a NAS signaling connection for the relay UE so that the relay UE can remain in a connected state. This can avoid service interruption of the remote UE, ensuring proper operating of services of the remote UE.

Optionally, in this embodiment of this application, in a case that the first device is the relay UE or an access network device of the relay UE, before the foregoing S201, the state indication method provided in this embodiment of this application may further include the following S203 and S204.

S203. The relay core network device transmits a release request message to the first device.

The release request message may be used for requesting to release a NAS signaling connection of the relay UE.

S204: The first device receives the release request message transmitted by the relay core network device.

The first state indication information may include the second indication information.

In this embodiment of this application, before the first device transmits the first state indication information to the relay core network device, the relay core network device may transmit the release request message to the first device, and after the first device receives the release request message, if the relay UE is performing UE-to-network relay communication for an emergency service, the first device may transmit the first state indication information (including the second indication information) to the relay core network device, so that after the relay core network device receives the first state indication information, the relay core network device may determine not to initiate a release procedure of a NAS signaling connection of the relay UE.

It should be noted that, in the foregoing S203 and S204, that the first state indication information includes the second indication information may be understood as follows: In a case that the relay UE performs UE-to-network relay communication for an emergency service, the first device may transmit the first state indication information to the relay core network device. In other words, the first device does not transmit the first state indication information if the relay UE is performing UE-to-network relay communication, so that the relay core network device can initiate a release procedure of a NAS signaling connection of the relay UE.

Optionally, in this embodiment of this application, when the first device is a different device, when transmitting the first state indication information to the relay core network device, the first device may further transmit other information to the relay core network device, so as to clearly indicate the relay core network device which specific relay UE is performing UE-to-network relay communication (and/or UE-to-network relay communication for an emergency service), or to clearly indicate the relay core network device which relay UE and which remote UE are performing UE-to-network relay communication (and/or UE-to-network relay communication for an emergency service). In this way, the relay core network device can store different content in a context of the relay UE.

The following uses two possible cases (Case 1 and Case 2) as examples for specific description of content stored by the relay core network device into the context of the relay UE.

Case 1: The first device is the relay UE or an access network device of the relay UE, and the relay core network device may store the first state indication information into the context of the relay UE.

Optionally, in Case 1, after S202, the state indication method provided in this embodiment of this application may further include the following S205.

S205. The relay core network device stores the first state indication information into the context of the relay UE.

In Case 1, when the first device is the relay UE, because the first state indication information may be carried in a NAS request message or a NAS reject message, and the NAS request message and the NAS reject message may include identifier information of the relay UE, the relay core network device can determine which relay UE is performing UE-to-network relay communication (and/or UE-to-network relay communication for an emergency service), and therefore the context of the relay UE can be determined so that the relay core network device can store the first state indication information into the context of the relay UE. In this way, the relay core network device can determine not to initiate a release procedure of a NAS signaling connection of the relay UE.

Optionally, in this embodiment of this application, when the first state indication information is carried in a newly designed NAS message, if this new type of NAS message does not include identifier information of the relay UE, when transmitting the first state indication information to the relay core network device, the relay UE may further transmit the identifier information of the relay UE to the relay core network device.

Optionally, in this embodiment of this application, the identifier information of the relay UE may be 5G globally unique temporary identifier (5G globally unique temporary identifier, 5G-GUTI), 5G S-temporary mobile subscription identifier (5G S-temporary mobile subscription identifier, 5G S-TMSI), or the like of the relay UE. This may be specifically determined depending on an actual use requirement and is not limited in this embodiment of this application.

In Case 1, when the first device is an access network device of the relay UE, because the access network device of the relay UE may serve a plurality of relay UE, when transmitting the first state indication information to the relay core network device, the access network device of the relay UE may further transmit identifier information of the relay UE to the relay core network device, so that the relay core network device can determine which relay UE is performing UE-to-network relay communication (and/or UE-to-network relay communication for an emergency service). Then the relay core network device receives the first state indication information and stores the first state indication information into the context of the relay UE.

Optionally, in the foregoing Case 1, when the first device is an access network device of the relay UE, before S205, the state indication method provided in this embodiment of this application may further include the following S206 and S207.

S206. The access network device of the relay UE transmits the identifier information of the relay UE to the relay core network device.

S207. The relay core network device receives the identifier information of the relay UE that is transmitted by the access network device.

In this embodiment of this application, after the relay core network device receives the identifier information of the relay UE, the relay core network device can determine the context of the relay UE based on the identifier information of the relay UE, so as to store the first state indication information into the context of the relay UE.

Optionally, in the foregoing Case 1, the relay core network device may alternatively associatively store the first state indication information and the identifier information of the relay UE into the context of the relay UE. To be specific, in the context of the relay UE, the first state indication information and the identifier information of the relay UE are a group of information, the identifier information of the relay UE can be queried based on the first state indication information, and the first state indication information can be queried based on the identifier information of the relay UE.

Case 2: When the first device is a remote core network device, because the remote core network device may serve a plurality of remote UE, when transmitting the first state indication information to the relay core network device, the remote core network device may further transmit identifier information of the relay UE and identifier information of remote UE to the relay core network device, so that the relay core network device can determine which relay UE and which remote UE are performing UE-to-network relay communication (and/or UE-to-network relay communication for an emergency service). Then, after the relay core network device receives the first state indication information, the identifier information of the relay UE, and the identifier information of the remote UE, the relay core network device can store the first state indication information and the identifier information of the remote UE into the context of the relay UE.

Optionally, in Case 2, the state indication method provided in this embodiment of this application may further include the following S208 to S211.

S208. The remote core network device receives the first state indication information and the identifier information of the relay UE that are transmitted by remote UE.

In the foregoing Case 2, before the remote core network device transmits the first state indication information to the relay core network device, remote UE (for example, the first remote UE in this embodiment of this application) may transmit the first state indication information and the identifier information of the relay UE to the remote core network device, so that the remote core network device can determine that the remote UE and the relay UE have established a UE-to-network relay connection, and the remote core network device can transmit the first state indication information to the relay core network device and transmit the identifier information of the relay UE and the identifier information of the remote UE to the relay core network device. In this way, the relay core network device can be notified that the relay UE and the remote UE are performing UE-to-network relay communication and/or UE-to-network relay communication for an emergency service.

Optionally, in this embodiment of this application, after the remote core network device transmits the first state indication information to the relay core network device, the remote core network device may transmit a first notification message to the remote UE.

The first notification message may be used for notifying the remote UE that the remote core network device has indicated the relay core network device that the remote UE and the relay UE have established a UE-to-network relay connection.

S209. The remote core network device transmits the identifier information of the relay UE and the identifier information of the remote UE to the relay core network device.

S210. The relay core network device receives the identifier information of the relay UE and the identifier information of the remote UE that are transmitted by the remote core network device.

S211. The relay core network device stores the first state indication information and the identifier information of the remote UE into the context of the relay UE.

In this embodiment of this application, after receiving the identifier information of the relay UE, the relay core network device can determine the context of the relay UE based on the identifier information of the relay UE, so as to store the first state indication information and the identifier information of the remote UE into the context of the relay UE. In this way, the relay core network device can determine not to initiate a release procedure of a NAS signaling connection of the relay UE.

Specifically, the relay core network device can associatively store the first state indication information and the identifier information of the remote UE into the context of the relay UE. In other words, in the context of the relay UE, the first state indication information, the identifier information of the relay UE, and the identifier information of the remote UE are a group of information.

Optionally, in this embodiment of this application, the identifier information of the remote UE may be 5G globally unique temporary identifier (5G globally unique temporary identifier, 5G-GUTI), 5G S-temporary mobile subscription identifier (5G S-temporary mobile subscription identifier, 5G S-TMSI), or the like of the remote UE. This may be specifically determined depending on an actual use requirement and is not limited in this embodiment of this application.

Optionally, in this embodiment of this application, in the foregoing Case 2, after determining the context of the relay UE, the relay core network device may alternatively associatively store the first state indication information, the identifier information of the remote UE, and the identifier information of the relay UE into the context of the relay UE.

Optionally, in this embodiment of this application, after receiving the first state indication information, the relay core network device may transmit a first response message to the first device, so as to notify the first device that the relay core network device has received the first state indication information.

Optionally, in this embodiment of this application, in a possible implementation, in a case that the first device is the relay UE or an access network device of the relay UE, after S202, the state indication method provided in this embodiment of this application may further include the following S212 to S214.

S212. The first device transmits second state indication information to the relay core network device.

The second state indication information may be used for determining that the restriction of not initiating a release procedure of a NAS signaling connection of the relay UE is to be removed.

S213. The relay core network device receives the second state indication information transmitted by the first device. The second state indication information is used for determining that the restriction of not initiating a release procedure of a NAS signaling connection of the relay UE is to be removed.

S214. The relay core network device deletes the first state indication information from the context of the relay UE according to the second state indication information.

In this embodiment of this application, in a case that the first device is the relay UE or an access network device of the relay UE, after the first device transmits the first state indication information to the relay core network device, the first device may further transmit the second state indication information to the relay core network device. After receiving the second state indication information, the relay core network device may delete the first state indication information from the context of the relay UE, so as to remove the restriction of not initiating a release procedure of a NAS signaling connection of the relay UE.

It should be noted that, in this embodiment of this application, after receiving the second state indication information, the relay core network device can determine that the relay UE currently does not have any UE-to-network relay communication and/or UE-to-network relay communication for an emergency service. Therefore, the relay core network device can delete the first state indication information stored in the context of the relay UE, so as to remove the restriction of not initiating a release procedure of a NAS signaling connection of the relay UE.

It can be understood that, in a case that the restriction of not initiating a release procedure of a NAS signaling connection of the relay UE is removed, the relay core network device may initiate a release procedure of a NAS signaling connection of the relay UE. For example, in a case that the relay core network device encounters NAS congestion, the relay core network device may initiate a release procedure of a NAS signaling connection of the relay UE.

Optionally, in this embodiment of this application, the second state indication information may include at least one of third indication information and fourth indication information.

The third indication information may indicate that the relay UE has completed the UE-to-network relay communication, or indicate that a connection for the UE-to-network relay communication has been released. The fourth indication information may indicate that the relay UE has completed the UE-to-network relay communication for the emergency service, or indicate that a connection for the UE-to-network relay communication for the emergency service has been released.

Optionally, in this embodiment of this application, when the second state indication information includes the third indication information, the relay core network device may delete the first indication information from the context of the relay LTE; or when the second state indication information includes the fourth indication information, the relay core network device may delete the second indication information from the context of the relay UE. In this way, in a case that the context of the relay UE includes neither the first indication information nor the second indication information, the relay core network device can determine to remove the restriction of not initiating (or the restriction that the relay core network device should not initiate) a release procedure of a NAS signaling connection of the relay UE.

Optionally, in this embodiment of this application, when the second state indication information includes the third indication information and the fourth indication information, the third indication information and the fourth indication information may be two pieces of separate indication information or one piece of indication information. This may be specifically determined depending on an actual use requirement and is not limited in this embodiment of this application.

Optionally, in this embodiment of this application, the second state indication information may be carried in a NAS request message or an N2 interface message.

For example, when the first device is the relay UE, the second state indication information may be carried in a NAS request message; or when the first device is an access network device of the relay UE, the second state indication information may be carried in an N2 interface message.

Optionally, in this embodiment of this application, after receiving the second state indication information, the relay core network device may transmit a second response message to the first device (the relay UE or an access network device of the relay UE), so as to notify the first device that the relay core network device has received the second state indication information.

Optionally, in this embodiment of this application, in another possible implementation, in a case that the first device is a remote core network device, after S202, the state indication method provided in this embodiment of this application may further include the following S215 to S219, or the following S215 to S218 and S220.

S215. The remote core network device transmits third state indication information to the relay core network device.

The third state indication information may be used for determining whether the restriction of not initiating a release procedure of a NAS signaling connection of the relay UE is to be removed.

S216. The relay core network device receives the third state indication information transmitted by the first device.

S217. The relay core network device deletes first state indication information corresponding to first remote UE from the context of the relay UE according to the third state indication information.

In this embodiment of this application, in a case that the first device is a remote core network device, after the remote core network device transmits the first state indication information to the relay core network device, the remote core network device may further transmit the third state indication information to the relay core network device, so as to notify the core network device that the relay UE and the first remote UE have completed UE-to-network relay communication and/or UE-to-network relay communication for an emergency service. After receiving the third state indication information, the relay core network device may delete the first state indication information corresponding to the first remote UE from the context of the relay UE.

Optionally, in this embodiment of this application, before the relay core network device deletes the first state indication information corresponding to the first remote UE, the remote core network device may transmit identifier information of the first remote UE and the identifier information of the relay UE to the relay core network device, so that the relay core network device can determine the context of the relay UE based on the identifier information of the relay UE, and determine the first state indication information corresponding to the first remote UE based on the identifier information of the first remote UE.

Optionally, in this embodiment of this application, before the remote core network device transmits the third state indication information, the identifier information of the first remote UE, and the identifier information of the relay UE to the relay core network device, the first remote UE may transmit the third state indication information to the remote core network device and transmit the identifier information of the relay UE to the remote core network device. In this way, after receiving the third state indication information and the identifier information of the relay UE, the remote core network device can transmit the third state indication information, the identifier information of the first remote UE, and the identifier information of the relay UE to the relay core network device.

Optionally, in this embodiment of this application, the third state indication information may include at least one of fifth indication information and sixth indication information.

The fifth indication information may indicate that the relay UE and the first remote UE have completed UE-to-network relay communication, or may indicate that a connection for UE-to-network relay communication between the relay UE and the first remote UE has been released. The sixth indication information may indicate that the relay UE and the first remote UE have completed UE-to-network relay communication for an emergency service, or may indicate that a connection for UE-to-network relay communication for an emergency service between the relay UE and the first remote UE has been released.

Optionally, in this embodiment of this application, when the third state indication information includes the fifth indication information, the relay core network device may delete first indication information corresponding to the first remote UE from the context of the relay UE; or when the third state indication information includes the sixth indication information, the relay core network device may delete second indication information corresponding to the first remote UE from the context of the relay UE.

Optionally, in this embodiment of this application, in a case that the first device is a remote core network device, the third state indication information may be carried in a NAS request message.

S218. The relay core network device determines whether the context of the relay UE further includes first state indication information corresponding to other remote UE.

In this embodiment of this application, after deleting the first state indication information corresponding to the first remote UE from the context of the relay UE, the relay core network device may determine whether the relay UE further includes first state indication information corresponding to other remote UE. If the context of the relay UE further includes first state indication information of other remote UE, the relay core network device may determine that the relay UE currently is still performing UE-to-network relay communication and/or UE-to-network relay communication for an emergency service, so that the relay core network device can perform the following S219. If the context of the relay UE does not include first state indication information of other remote UE, the relay core network device may determine that the relay UE has completed UE-to-network relay communication and/or UE-to-network relay communication for an emergency service, so that the relay core network device can perform the following S220.

S219. The relay core network device determines not to remove the restriction of not initiating a release procedure of a NAS signaling connection of the relay UE.

S220. The relay core network device determines to remove the restriction of not initiating a release procedure of a NAS signaling connection of the relay UE.

It should be noted that, in this embodiment of this application, in a case that the restriction of not initiating a release procedure of a NAS signaling connection of the relay UE is not removed, the relay core network device does not initiate a release procedure of a NAS signaling connection of the relay UE. In a case that the restriction of not initiating a release procedure of a NAS signaling connection of the relay UE is removed, the relay core network device may initiate a release procedure of a NAS signaling connection of the relay UE. For example, in a case that the relay core network device encounters NAS congestion, the relay core network device may initiate a release procedure of a NAS signaling connection of the relay UE.

Optionally, in this embodiment of this application, after receiving the third state indication information, the relay core network device may transmit a third response message to the remote core network device, so as to notify the first device that the relay core network device has received the third state indication information.

Optionally, in this embodiment of this application, after transmitting the third state indication information to the relay core network device, the remote core network device may transmit a second notification message to the first remote UE. The second notification message may be used to notify the first remote UE that the remote core network device has indicated the relay core network device that the first remote UE and the relay UE have completed UE-to-network relay communication and/or UE-to-network relay communication for an emergency service.

To describe the embodiments of this application more clearly, the following embodiments describe different application scenarios of the state indication method provided in the embodiments of this application by using an example in which the relay core network device is a relay AMF entity, the remote core network device is a remote AMF entity, and an access network device of relay UE is a RAN in the following Embodiment 1, Embodiment 2, Embodiment 3, Embodiment 4, and Embodiment 5.

Embodiment 1: Relay UE notifies the relay AMF entity by using a NAS request message that the relay UE is currently processing a UE-to-network relay service of remote UE.

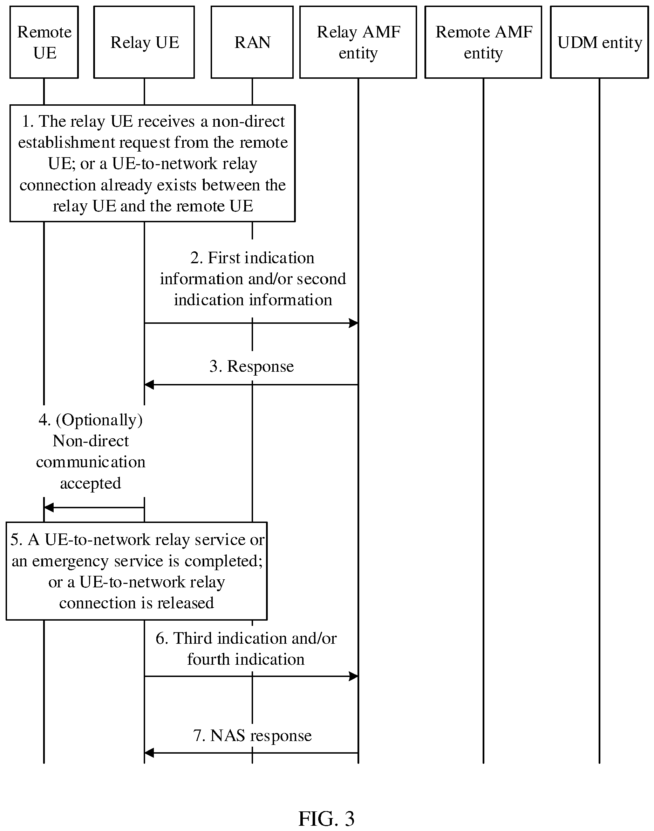

The following describes Embodiment 1 in detail with reference to FIG. 3.

As shown in FIG. 3, in step 1, the relay UE receives a non-direct establishment request from the remote LTE; or a LTE-to-network relay connection already exists between the relay UE and the remote UE.

The non-direct establishment request may include indication information of an emergency connection or an emergency service type.

In step 2, after receiving the non-direct establishment request from the remote UE, the relay UE transmits first indication information and/or second indication information to the relay AMF entity.
- The first indication information may indicate that the relay UE is performing UE-to-network relay communication.
- The second indication information may indicate that the relay UE is performing UE-to-network relay communication for an emergency service.

The first indication information and the second indication information may be carried in a conventional NAS request message, a newly designed NAS request message, or a dedicated NAS request message capable of carrying the first indication information and the second indication information.

In step 3, after receiving the first indication information and/or the second indication information transmitted by the relay UE, the relay AMF entity should not initiate a release procedure of a NAS signaling connection of the relay UE.

NAS signaling management specifically implemented by the relay AMF entity is as follows:
- If the relay AMF entity receives only the first indication information, the relay AMF entity should not initiate a release procedure of a NAS signaling connection of the relay UE unless a core network of the relay UE encounters NAS congestion (congestion) or the like.
- If the relay AMF entity receives the first indication information and the second indication information, the relay AMF entity should not initiate a release procedure of a NAS signaling connection of the relay UE.
- If the relay AMF entity receives only the second indication information, the relay AMF entity should not initiate a release procedure of a NAS signaling connection of the relay UE.

After receiving the first indication information and/or the second indication information transmitted by the relay UE, the relay AMF entity stores the first indication information and/or the second indication information into a context of the relay UE and transmits a response (response) message to the relay UE.

In step 4, optionally, if the relay UE receives the non-direct establishment request message from the remote UE in step 1, the relay UE may transmit a non-direct establishment accept message to the remote UE, so as to establish a UE-to-network relay connection to the remote UE.

In step 5, the UE-to-network relay service or the UE-to-network relay emergency service between the relay UE and the remote UE is completed, or the UE-to-network relay connection between the relay UE and the remote UE is released.

In step 6, the relay UE transmits third indication information and/or fourth indication information to the relay AMF entity.
- The third indication information may indicate the relay AMF entity that the relay UE has completed UE-to-network relay communication, or has released the UE-to-network relay connection.
- The fourth indication information may indicate the relay AMF entity that the relay UE has completed the UE-to-network relay emergency communication service or the relay UE has released the UE-to-network relay connection for the emergency service.

The third indication information and the fourth indication information may be carried in a conventional NAS request message, a newly designed NAS request message, or a dedicated NAS request message capable of carrying the third indication information and the fourth indication information.

In step 7, after receiving the third indication information and/or the fourth indication information from the relay UE, the relay AMF entity removes the restriction that NAS signaling release should not be initiated, deletes the first indication information and/or the second indication information from the UE context, and transmits a NAS response (response) message to the relay UE.

Embodiment 2: Remote UE notifies the relay AMF entity via the remote AMF entity that relay UE is currently processing a UE-to-network relay service of the remote UE.

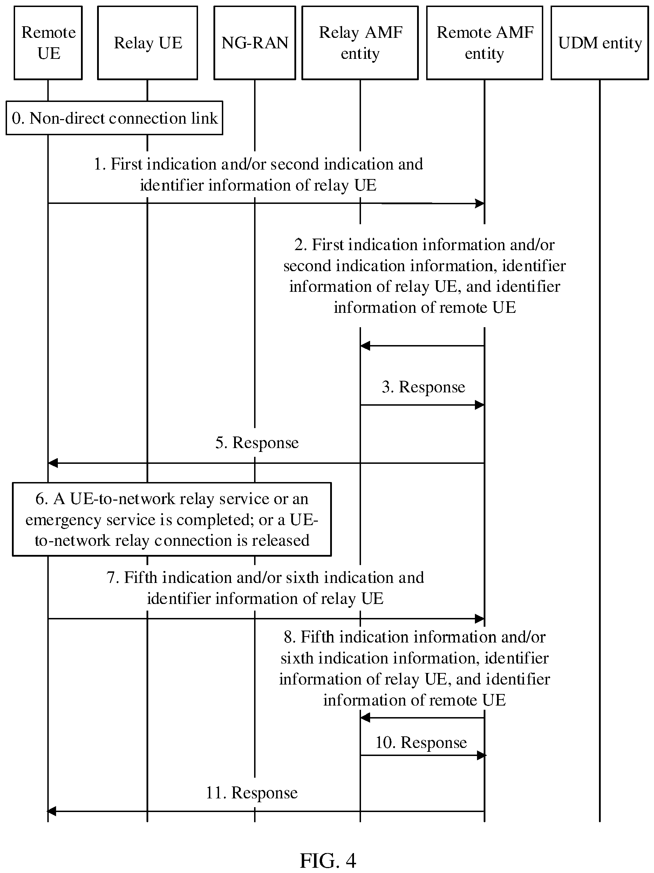

The following describes Embodiment 2 in detail with reference to FIG. 4.

As shown in FIG. 4, in step 0, the remote UE and the relay UE have established a UE-to-network relay connection, that is, there is a non-direct connection link between the remote UE and the relay UE.

In step 1, the remote UE transmits first indication information and/or second indication information to the remote AMF entity and transmits identifier information of the relay UE (for example, 5G-GUTI of the relay UE) to the remote AMF entity.
- The first indication information may indicate that the relay UE is performing UE-to-network relay communication.
- The second indication information may indicate that the relay UE is performing UE-to-network relay communication for an emergency service.

The first indication information (and/or the second indication information) and the identifier information of the relay UE may be carried in a conventional NAS request message or a newly designed NAS message.

In step 2, after receiving the first indication information (and/or the second indication information) and the identifier information of the relay UE that are transmitted by the remote UE, the remote AMF entity transmits the first indication information and/or the second indication information, the identifier information of the relay UE, and identifier information of the remote UE (for example, 5G-GUTI of the remote UE) to the relay AMF entity.

In step 3, after receiving the first indication information and/or the second indication information transmitted by the remote AMF entity, the relay AMF entity should not initiate a release procedure of a NAS signaling connection of the relay UE.

NAS signaling management specifically implemented by the relay AMF entity is as follows:
- If the relay AMF entity receives only the first indication information, the relay AMF entity should not initiate a release procedure of a NAS signaling connection of the relay UE unless a core network of the relay UE encounters NAS congestion or the like.
- If the relay AMF entity receives the first indication information and the second indication information, the relay AMF entity should not initiate a release procedure of a NAS signaling connection of the relay UE.
- If the relay AMF entity receives only the second indication information, the relay AMF entity should not initiate a release procedure of a NAS signaling connection of the relay UE.

After the relay AMF entity receives the first indication information and/or the second indication information transmitted by the relay UE, the relay AMF entity stores the first indication information and/or the second indication information and the associated identifier information of the remote UE into a context of the relay UE and transmits a response (response) message to the remote AMF entity.

In step 5, the remote AMF entity returns a NAS response (NAS response) message to the remote UE.

In step 6, the UE-to-network relay service or the UE-to-network relay emergency service between the relay UE and the remote UE is completed, or the UE-to-network relay connection between the relay UE and the remote UE is released.

In step 7, the remote UE transmits fifth indication information and/or sixth indication information and the identifier information of the relay UE (for example, 5G-GUTI of the relay UE) to the remote AMF entity.
- The fifth indication information may indicate the relay AMF entity that the remote UE and the relay UE have completed UE-to-network relay communication, or the UE-to-network relay connection between the remote UE and the relay UE has been released.
- The sixth indication information may indicate the relay AMF entity that the remote UE and the relay UE have completed the UE-to-network relay emergency communication service, or the UE-to-network relay connection for the emergency service between the remote UE and the relay UE has been released.

The fifth indication information and the sixth indication information may be carried in a conventional NAS request message or a newly designed NAS request message.

In step 8, after receiving the fifth indication information and/or the sixth indication information and the identifier information of the relay UE that are transmitted by the remote UE, the remote AMF entity transmits the fifth indication information and/or the sixth indication information, the identifier information of the relay UE, and the identifier information of the remote UE to the relay AMF entity.

In step 9, the relay AMF entity deletes the first indication information and/or the second indication information associated with the remote UE from the context of the relay UE. The relay AMF entity further determines whether the context of the relay UE currently further includes first indication information and/or second indication information associated with other remote UE.
- If the context of the relay UE further includes first indication information and/or second indication information associated with other remote UE, the relay AMF entity should not initiate a release procedure of a NAS signaling connection of the relay UE, that is, the relay AMF entity does not remove the restriction that a NAS signaling connection release procedure should not be initiated for the relay UE.
- If the context of the relay UE does not include first indication information and/or second indication information associated with other remote UE, the relay AMF entity removes the restriction that a NAS signaling connection release procedure should not be initiated for the relay UE.

In step 10, the relay AMF entity returns a response message to the remote AMF entity.

In step 11, the remote AMF entity returns a NAS response message to the remote UE.

Embodiment 3: The RAN notifies the relay AMF entity by using an N2 interface message (for example, an N2 message) that relay UE is currently processing a UE-to-network relay service of remote UE.

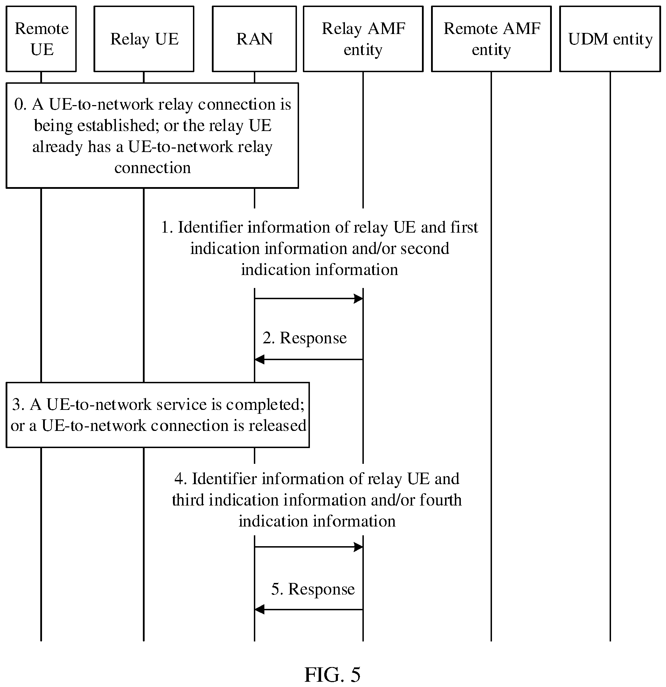

The following describes Embodiment 3 in detail with reference to FIG. 5.

As shown in FIG. 5, in step 0, a UE-to-network relay connection is being established, or the relay UE already has a UE-to-network relay connection.

In step 1, the RAN transmits first indication information and/or second indication information and identifier information of the relay UE (for example, 5G-GUTI of the relay UE) to the relay AMF entity by using an N2 message.
- The first indication information may indicate that the relay UE is performing UE-to-network relay communication.
- The second indication information may indicate that the relay UE is performing UE-to-network relay communication for an emergency service.

In step 2, after receiving the first indication information and/or the second indication information transmitted by the RAN, the relay AMF entity should not initiate a release procedure of a NAS signaling connection of the relay UE.

NAS signaling management specifically implemented by the relay AMF entity is as follows:
- If the relay AMF entity receives only the first indication information, the relay AMF entity should not initiate a release procedure of a NAS signaling connection of the relay UE unless a core network of the relay UE encounters NAS congestion or the like.
- If the relay AMF entity receives the first indication information and the second indication information, the relay AMF entity should not initiate a release procedure of a NAS signaling connection of the relay UE.
- If the relay AMF entity receives only the second indication information, the relay AMF entity should not initiate a release procedure of a NAS signaling connection of the relay UE.

After receiving the first indication information and/or the second indication information transmitted by the relay UE, the relay AMF entity stores the first indication information and/or the second indication information into a context of the relay UE and transmits a response (response) message to the RAN.

In step 3, the UE-to-network relay service is completed, or the UE-to-network relay connection of the relay UE is released.

In step 4, the RAN transmits third indication information and/or fourth indication information and the identifier information of the relay UE to the relay AMF entity by using an N2 message.
- The third indication information may indicate the relay AMF entity that the relay UE has completed UE-to-network relay communication, or has released the UE-to-network relay connection.
- The fourth indication information may indicate the relay AMF entity that the relay UE has completed the UE-to-network relay emergency communication service, or has released the UE-to-network relay connection for the emergency service.

In step 5, the relay AMF entity removes the restriction that a NAS signaling connection release procedure should not be initiated, deletes the first indication information and/or the second indication information from the context of the relay UE, and transmits a response message (for example, an N2 interface message) to the RAN.

Embodiment 4: The RAN notifies the relay AMF entity by using a reject message (for example, a reject message) that relay UE is currently processing a UE-to-network relay emergency service.

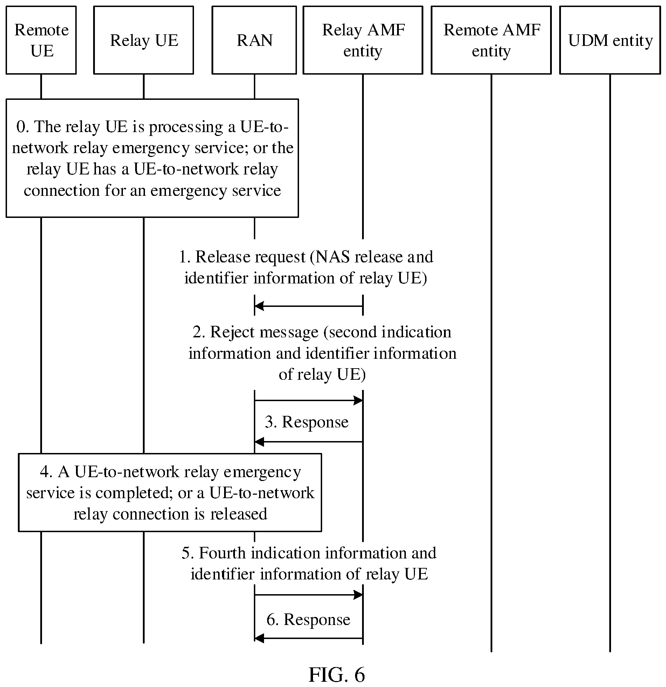

The following describes Embodiment 4 in detail with reference to FIG. 6.

As shown in FIG. 6, in step 0, the relay UE is processing a UE-to-network relay emergency service, or the relay UE has a UE-to-network relay connection for an emergency service.

In step 1, the RAN receives, from the relay AMF entity, a message carrying a request to release a NAS signaling connection of the relay UE, for example, an N2 interface message, where the N2 interface message carries identifier information of the relay UE.

In step 2, the RAN transmits a reject message (reject message) to the relay AMF entity through an N2 interface, where the reject message may carry second indication information.

Optionally, the reject message may include the identifier information of the relay UE.
- The second indication information may indicate that the relay UE is performing UE-to-network relay communication for an emergency service.

In step 3, after the relay AMF entity receives the second indication information in the reject message from the RAN, the relay AMF entity should not initiate a release procedure of a NAS signaling connection of the relay UE, and stores the second indication information into a context of the relay UE, and the relay AMF entity transmits a response (response) message to the RAN.

In step 4, the UE-to-network relay emergency service is completed, or the UE-to-network relay connection of the relay UE is released.

In step 5, the RAN transmits fourth indication information and the identifier information of the relay UE to the relay AMF entity by using an N2 message.
- The fourth indication information may indicate the relay AMF entity that the relay UE has completed the UE-to-network relay emergency communication service, or the relay UE has released the UE-to-network relay connection for the relay emergency service.

In step 6, the relay AMF entity removes the restriction that a NAS signaling connection release procedure should not be initiated, deletes the second indication information from the context of the relay UE, and transmits a response (response) message to the RAN.

Embodiment 5: Relay UE notifies the relay AMF entity by using a NAS reject message (for example, a NAS reject message) that the relay UE is currently processing a UE-to-network relay emergency service.

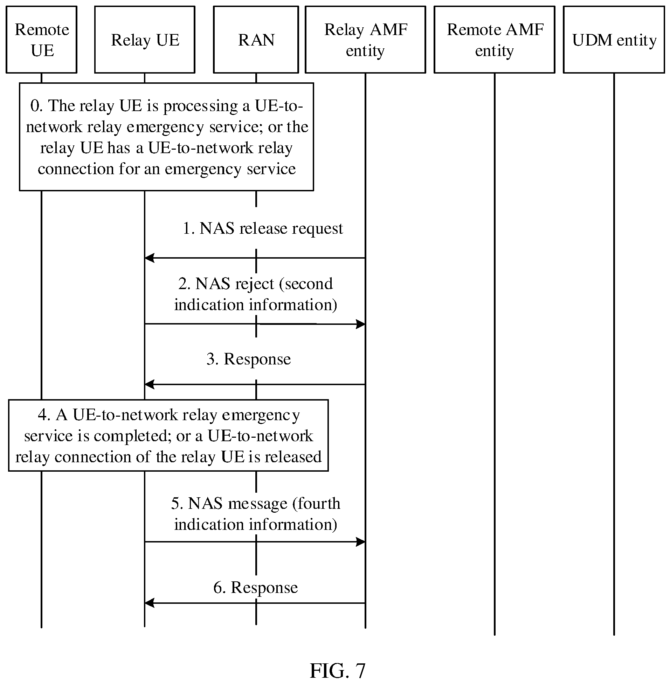

The following describes Embodiment 5 in detail with reference to FIG. 7.

As shown in FIG. 7, in step 0, the relay UE is processing a UE-to-network relay emergency service, or the relay UE has a UE-to-network relay connection for an emergency service.

In step 1, the relay UE receives a NAS signaling connection release request message from the relay AMF entity.

In step 2, the relay UE transmits a NAS reject message to the relay AMF entity, where the NAS reject message carries second indication information.
- The second indication information may indicate that the relay UE is performing UE-to-network relay communication for an emergency service.

In step 3, after receiving the second indication information in the NAS reject message (reject message), the relay AMF entity should not initiate a release procedure of a NAS signaling connection of the relay UE, and stores the second indication information into a context of the relay UE, and the relay AMF entity transmits a response (response) message to the relay UE.

In step 4, the UE-to-network relay emergency service is completed, or the UE-to-network relay connection of the relay UE is released.

In step 5, the relay UE transmits fourth indication information to the relay AMF entity by using a NAS message.
- The fourth indication information may indicate the relay AMF entity that the relay UE has completed the UE-to-network relay emergency communication service or the relay UE has released the UE-to-network relay connection for the relay emergency service.

In step 6, the relay AMF entity removes the restriction that a NAS signaling connection release procedure should not be initiated, deletes the second indication information from the context of the relay UE, and transmits a NAS response (response) message to the relay UE.

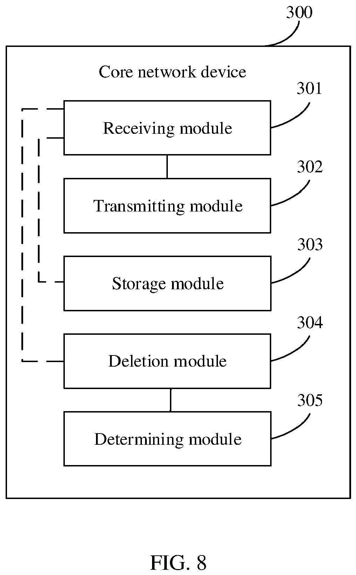

As shown in FIG. 8, an embodiment of this application provides a core network device 300. The core network device 300 may include a receiving module 301, and the core network device may be a relay core network device. The receiving module is configured to receive first state indication information transmitted by a first device, where the first state indication information includes at least one of first indication information and second indication information, the first indication information indicates that relay UE is performing UE-to-network relay communication, and the second indication information indicates that the relay UE is performing UE-to-network relay communication for an emergency service, where the first state indication information is used for determining that a release procedure of a NAS signaling connection of the relay UE is not to be initiated.

Optionally, the first device is the relay UE or an access network device of the relay UE. As shown in FIG. 8, the core network device 300 further includes a transmitting module 302. The transmitting module 302 is configured to: before the receiving module 301 receives the first state indication information transmitted by the first device, transmit a release request message to the first device, where the release request message is used to request to release a NAS signaling connection of the relay UE.

Optionally, the first device is the relay UE or an access network device of the relay UE. As shown in FIG. 8, the core network device 300 further includes a storage module 303. The storage module 303 is configured to: after the receiving module 301 receives the first state indication information transmitted by the first device, store the first state indication information into a context of the relay UE.

Optionally, the first device is an access network device of the relay UE. The receiving module 301 is further configured to: before the storage module 303 stores the first state indication information into a context of the relay UE, receive identifier information of the relay UE that is transmitted by the access network device.

Optionally, the first device is a remote core network device. As shown in FIG. 8, the core network device 300 further includes a storage module 303. The receiving module 301 is further configured to receive identifier information of the relay UE and identifier information of remote UE that are transmitted by the remote core network device. The storage module 303 is configured to store the first state indication information and the identifier information of the remote UE that are received by the receiving module 301 into a context of the relay UE.

Optionally, the first device is the relay UE or an access network device of the relay UE. As shown in FIG. 8, the core network device 300 further includes a deletion module 304. The receiving module 301 is further configured to: after receiving the first state indication information transmitted by the first device, receive second state indication information transmitted by the first device, where the second state indication information is used for determining that the restriction of not initiating a release procedure of a NAS signaling connection of the relay UE is to be removed. The deletion module 304 is configured to delete the first state indication information from the context of the relay UE according to the second state indication information received by the receiving module 301.

Optionally, the second state indication information includes at least one of third indication information and fourth indication information. The third indication information indicates that the relay UE has completed the UE-to-network relay communication, or indicates that a connection for the UE-to-network relay communication has been released. The fourth indication information indicates that the relay UE has completed the UE-to-network relay communication for the emergency service, or indicates that a connection for the UE-to-network relay communication for the emergency service has been released.

Optionally, the first device is a remote core network device. As shown in FIG. 8, the core network device 300 further includes a deletion module 304 and a determining module 305. The receiving module 301 is further configured to: after receiving the first state indication information transmitted by the first device, receive third state indication information transmitted by the first device, where the third state indication information is used for determining whether the restriction of not initiating a release procedure of a NAS signaling connection of the relay UE is to be removed. The deletion module 304 is configured to delete first state indication information corresponding to first remote UE from the context of the relay UE according to the third state indication information received by the receiving module 301. The determining module 305 is configured to: after the deletion module 304 deletes the first state indication information corresponding to the first remote UE, in a case that the context of the relay UE further includes first state indication information corresponding to other remote UE, determine that the restriction of not initiating a release procedure of a NAS signaling connection of the relay UE is not to be removed; or in a case that the context of the relay UE does not include first state indication information corresponding to other remote UE, determine that the restriction of not initiating a release procedure of a NAS signaling connection of the relay UE is to be removed.

Optionally, the third state indication information includes at least one of fifth indication information and sixth indication information. The fifth indication information indicates that the relay UE and the first remote UE have completed UE-to-network relay communication, or indicates that a connection for UE-to-network relay communication between the relay UE and the first remote UE has been released. The sixth indication information indicates that the relay UE and the first remote UE have completed UE-to-network relay communication for an emergency service, or indicates that a connection for UE-to-network relay communication for an emergency service between the relay UE and the first remote UE has been released.

The core network device provided in this embodiment of this application can implement the processes performed by the relay core network device in the foregoing embodiments of the state indication method, with the same technical effects achieved. To avoid repetition, details are not described herein again.

This embodiment of this application provides a core network device, which may specifically be a relay core network device. Because the first indication information may indicate that the relay UE is performing UE-to-network relay communication and the second indication information may indicate that the relay UE is performing UE-to-network relay communication for an emergency service, after the relay core network device receives the first state indication information (including the first indication information and/or the second indication information), the relay core network device may determine that the relay UE is providing a service for the remote UE, and therefore the relay core network device can determine not to initiate a release procedure of a NAS signaling connection of the relay UE, that is, to retain a NAS signaling connection for the relay UE so that the relay UE can remain in a connected state. This can avoid service interruption of the remote UE, ensuring proper operating of services of the remote UE.

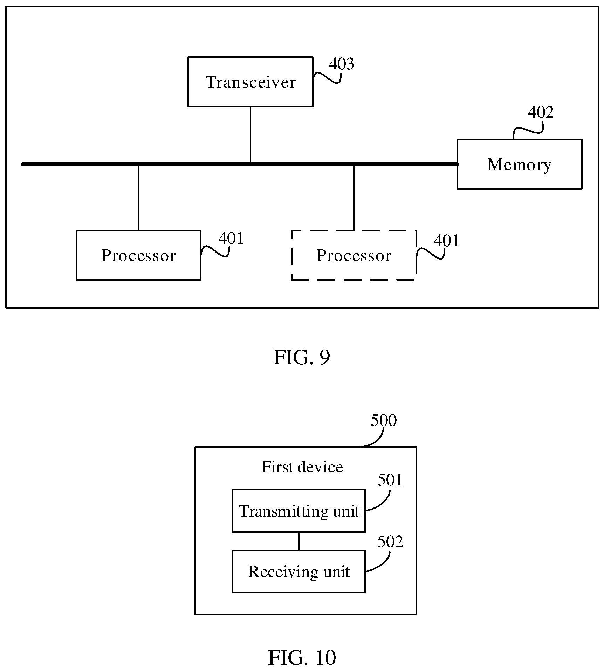

Optionally, an embodiment of this application further provides a core network device, including a processor 401, a memory 402, and a program or instructions stored in the memory 402 and capable of running on the processor 401, as shown in FIG. 9. When the program or instructions are executed by the processor 401, the processes of the foregoing method embodiments are implemented, with the same technical effects achieved. To avoid repetition, details are not described herein again.

As shown in FIG. 10, an embodiment of this application provides a device. The device is a first device 500, and the first device 500 includes a transmitting unit 501. The transmitting unit 501 is configured to transmit first state indication information to a relay core network device, where the first state indication information includes at least one of first indication information and second indication information, the first indication information indicates that relay UE is performing UE-to-network relay communication, and the second indication information indicates that the relay UE is performing UE-to-network relay communication for an emergency service, where the first state indication information is used for determining that a release procedure of a NAS signaling connection of the relay UE is not to be initiated.

Optionally, the first device is the relay UE or an access network device of the relay UE. As shown in FIG. 10, the first device 500 further includes a receiving unit 502. The receiving unit 502 is configured to: before the transmitting unit 501 transmits the first state indication information to the relay core network device, receive a release request message transmitted by the relay core network device, where the release request message is used to request to release a NAS signaling connection of the relay UE, and the first state indication information includes the second indication information.

Optionally, the first device is a remote core network device. As shown in FIG. 10, the first device 500 further includes a receiving unit 502. The receiving unit 502 is configured to: before the transmitting unit 501 transmits the first state indication information to the relay core network device, receive the first state indication information and identifier information of the relay UE that are transmitted by remote UE. The transmitting unit 501 is further configured to transmit the identifier information of the relay UE and identifier information of the remote UE to the relay core network device.

Optionally, the first device is the relay UE or an access network device of the relay UE. The transmitting unit 501 may be further configured to: after transmitting the first state indication information to the relay core network device, transmit second state indication information to the relay core network device, where the second state indication information is used for determining that the restriction of not initiating a release procedure of a NAS signaling connection of the relay UE is to be removed.

Optionally, the second state indication information includes at least one of third indication information and fourth indication information. The third indication information indicates that the relay UE has completed the UE-to-network relay communication, or indicates that a connection for the UE-to-network relay communication has been released. The fourth indication information indicates that the relay UE has completed the UE-to-network relay communication for the emergency service, or indicates that a connection for the UE-to-network relay communication for the emergency service has been released.

Optionally, the first device is a remote core network device. The transmitting unit 501 is further configured to: after transmitting the first state indication information to the relay core network device, transmit third state indication information to the relay core network device, where the third state indication information is used for determining whether the restriction of not initiating a release procedure of a NAS signaling connection of the relay UE is to be removed.

Optionally, the third state indication information includes at least one of fifth indication information and sixth indication information. The fifth indication information indicates that the relay UE and first remote UE have completed UE-to-network relay communication, or indicates that a connection for UE-to-network relay communication between the relay UE and the first remote UE has been released. The sixth indication information indicates that the relay UE and the first remote UE have completed UE-to-network relay communication for an emergency service, or indicates that a connection for UE-to-network relay communication for an emergency service between the relay UE and the first remote UE has been released.

The device provided in this embodiment of this application can implement the processes performed by the first device in the foregoing embodiments of the state indication method, with the same technical effects achieved. To avoid repetition, details are not described herein again.

This embodiment of this application provides a device, which may specifically be a first device. Because the first indication information may indicate that the relay UE is performing UE-to-network relay communication and the second indication information may indicate that the relay UE is performing UE-to-network relay communication for an emergency service, the first device can transmit the first state indication information (including the first indication information and/or the second indication information) to the relay core network device to notify the relay core network device that the relay UE is providing a service for remote UE. Therefore, after the relay core network device receives the first state indication information, the relay core network device can determine not to initiate a release procedure of a NAS signaling connection of the relay UE, that is, to retain a NAS signaling connection for the relay UE so that the relay UE can remain in a connected state. This can avoid service interruption of the remote UE, ensuring proper operating of services of the remote UE.

Optionally, an embodiment of this application further provides a device, which may specifically be a first device, including a processor, a memory, and a program or instructions stored in the memory and capable of running on the processor. When the program or instructions are executed by the processor, the processes of the foregoing embodiment of the state indication method are implemented, with same technical effects achieved. To avoid repetition, details are not described herein again.

FIG. 9 is a schematic diagram of hardware of a core network device according to an embodiment of this application. As shown in FIG. 9, the core network device may include one or more processors 401, a memory 402, and a transceiver 403.

The transceiver 403 may be configured to receive first state indication information transmitted by a first device, where the first state indication information includes at least one of first indication information and second indication information, the first indication information indicates that relay UE is performing UE-to-network relay communication, and the second indication information indicates that the relay UE is performing UE-to-network relay communication for an emergency service, where the first state indication information is used for determining that a release procedure of a NAS signaling connection of the relay UE is not to be initiated.

Optionally, the first device is the relay UE or an access network device of the relay UE. The transceiver 403 may be further configured to: before receiving the first state indication information transmitted by the first device, transmit a release request message to the first device, where the release request message is used to request to release a NAS signaling connection of the relay UE.

Optionally, the first device is the relay UE or an access network device of the relay UE. The memory 402 may be configured to: after the transceiver 403 receives the first state indication information transmitted by the first device, store the first state indication information into a context of the relay UE.

Optionally, the first device is an access network device of the relay UE. The transceiver 403 may be further configured to: before the memory 402 stores the first state indication information into a context of the relay UE, receive identifier information of the relay UE that is transmitted by the access network device.

Optionally, the first device is a remote core network device. The transceiver 403 may be further configured to receive identifier information of the relay UE and identifier information of remote UE that are transmitted by the remote core network device. The memory 402 may be configured to store the first state indication information and the identifier information of the remote UE that are received by the transceiver 403 into a context of the relay UE.

Optionally, the first device is the relay UE or an access network device of the relay UE. The transceiver 403 may be further configured to: after receiving the first state indication information transmitted by the first device, receive second state indication information transmitted by the first device, where the second state indication information is used for determining that the restriction of not initiating a release procedure of a NAS signaling connection of the relay UE is to be removed. The processor 401 may be configured to delete the first state indication information from the context of the relay UE according to the second state indication information received by the transceiver 403.

Optionally, the second state indication information includes at least one of third indication information and fourth indication information. The third indication information indicates that the relay UE has completed the UE-to-network relay communication, or indicates that a connection for the UE-to-network relay communication has been released. The fourth indication information indicates that the relay UE has completed the UE-to-network relay communication for the emergency service, or indicates that a connection for the UE-to-network relay communication for the emergency service has been released.

Optionally, the first device is a remote core network device. The transceiver 403 is further configured to: after receiving the first state indication information transmitted by the first device, receive third state indication information transmitted by the first device, where the third state indication information is used for determining whether the restriction of not initiating a release procedure of a NAS signaling connection of the relay UE is to be removed. The processor 401 may be configured to: delete first state indication information corresponding to first remote UE from the context of the relay UE according to the third state indication information received by the transceiver 403; and after deleting the first state indication information corresponding to the first remote UE, in a case that the context of the relay UE further includes first state indication information corresponding to other remote UE, determine that the restriction of not initiating a release procedure of a NAS signaling connection of the relay UE is not to be removed; or in a case that the context of the relay UE does not include first state indication information corresponding to other remote UE, determine that the restriction of not initiating a release procedure of a NAS signaling connection of the relay UE is to be removed.

Optionally, the third state indication information includes at least one of fifth indication information and sixth indication information. The fifth indication information indicates that the relay UE and the first remote UE have completed UE-to-network relay communication, or indicates that a connection for UE-to-network relay communication between the relay UE and the first remote UE has been released. The sixth indication information indicates that the relay UE and the first remote UE have completed UE-to-network relay communication for an emergency service, or indicates that a connection for UE-to-network relay communication for an emergency service between the relay UE and the first remote UE has been released.

This embodiment of this application provides a core network device, which may specifically be a relay core network device. Because the first indication information may indicate that the relay UE is performing UE-to-network relay communication and the second indication information may indicate that the relay UE is performing UE-to-network relay communication for an emergency service, after the relay core network device receives the first state indication information (including the first indication information and/or the second indication information), the relay core network device can determine that the relay UE is providing a service for remote UE, and therefore the relay core network device can determine not to initiate a release procedure of a NAS signaling connection of the relay UE, that is, to retain a NAS signaling connection for the relay UE so that the relay UE can remain in a connected state. This can avoid service interruption of the remote UE, ensuring proper operating of services of the remote UE.

It can be understood that, in the embodiments of this application, the receiving module 301 and the transmitting module 302 in the foregoing schematic structural diagram (for example, FIG. 8) of the core network device may be implemented by the transceiver 403; the storage module 303 in the schematic structural diagram of the core network device may be implemented by the memory 402; and the deletion module 304 and the determining module 305 in the schematic structural diagram of the core network device may be implemented by the processor 401.

It should be noted that one processor 401 of the two processors 401 in FIG. 9 is denoted by dashed lines to indicate that there may be one or more processors 401 in the network device 400. In FIG. 9, the network device 400 including two processors 401 is used as an example for description.

It can be understood that, in this embodiment of this application, the core network device may be the relay core network device 01 in the communication system shown in FIG. 1 in the foregoing embodiment.

Optionally, in this embodiment of this application, the first device may be UE, a core network device, or an access network device.

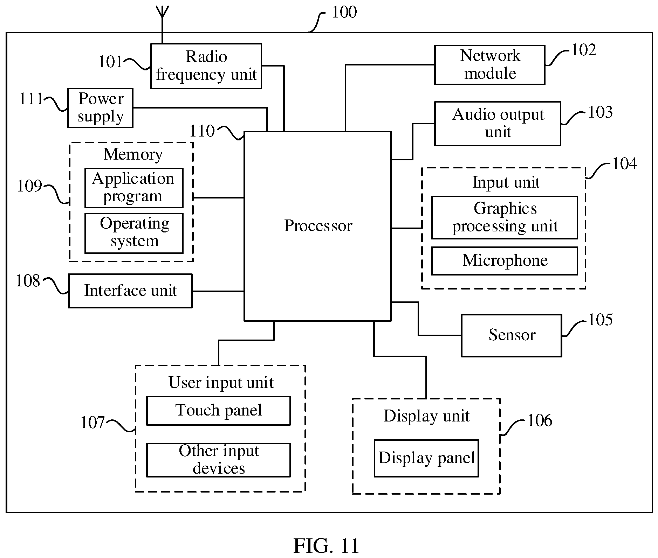

FIG. 11 is a schematic diagram of hardware of UE for implementing the embodiments of this application. As shown in FIG. 11, the UE 100 includes but is not limited to components such as a radio frequency unit 101, a network module 102, an audio output unit 103, an input unit 104, a sensor 105, a display unit 106, a user input unit 107, an interface unit 108, a memory 109, a processor 110, and a power supply 111.

A person skilled in the art can understand that the UE 100 shown in FIG. 11 may further include the power supply 111 (for example, a battery) supplying power to all components, and the power supply 111 may be logically connected to the processor 110 through a power management system. In this way, functions such as charge management, discharge management, and power consumption management are implemented by using the power management system. The structure of the UE shown in FIG. 11 does not constitute any limitation on the UE. The UE may include more or fewer components than those shown in FIG. 11, or some components may be combined, or the components may be disposed differently. Details are not repeated herein.

In a case that the first device is UE (which may specifically be relay UE), the radio frequency unit 101 may be configured to transmit first state indication information to a relay core network device, where the first state indication information includes at least one of first indication information and second indication information, the first indication information indicates that relay UE is performing UE-to-network relay communication, and the second indication information indicates that the relay UE is performing UE-to-network relay communication for an emergency service, where the first state indication information is used for determining that a release procedure of a NAS signaling connection of the relay UE is not to be initiated.

Optionally, the radio frequency unit 101 may be configured to: before transmitting the first state indication information to the relay core network device, receive a release request message transmitted by the relay core network device, where the release request message is used to request to release a NAS signaling connection of the relay UE, and the first state indication information includes the second indication information.

Optionally, the radio frequency unit 101 may be further configured to: after transmitting the first state indication information to the relay core network device, transmit second state indication information to the relay core network device, where the second state indication information is used for determining that the restriction of not initiating a release procedure of a NAS signaling connection of the relay UE is to be removed.

Optionally, the second state indication information includes at least one of third indication information and fourth indication information. The third indication information indicates that the relay UE has completed the UE-to-network relay communication, or indicates that a connection for the UE-to-network relay communication has been released. The fourth indication information indicates that the relay UE has completed the UE-to-network relay communication for the emergency service, or indicates that a connection for the UE-to-network relay communication for the emergency service has been released.

This embodiment of this application provides UE, where the UE may be relay UE. Because the first indication information may indicate that the relay UE is performing UE-to-network relay communication and the second indication information may indicate that the relay UE is performing UE-to-network relay communication for an emergency service, the relay UE can transmit the first state indication information (including the first indication information and/or the second indication information) to the relay core network device to notify the relay core network device that the relay UE is providing a service for remote UE. Therefore, after the relay core network device receives the first state indication information, the relay core network device can determine not to initiate a release procedure of a NAS signaling connection of the relay UE, that is, to retain a NAS signaling connection for the relay UE so that the relay UE can remain in a connected state. This can avoid service interruption of the remote UE, ensuring proper operating of services of the remote UE.

It can be understood that, in this embodiment of this application, the transmitting unit 501 and the receiving unit 502 in the foregoing schematic structural diagram (for example, FIG. 10) of the first device may be implemented by the radio frequency unit 101.

In this embodiment of this application, the UE 100 may be the relay UE 02 in the communication system shown in FIG. 1 in the foregoing embodiment.

FIG. 9 is a schematic diagram of hardware of an access network device according to an embodiment of this application. As shown in FIG. 9, the access network device may include one or more processors 401, a memory 402, and a transceiver 403.

In a case that the first device is an access network device (which may specifically be an access network device of relay UE), the transceiver 403 may be configured to transmit first state indication information to a relay core network device, where the first state indication information includes at least one of first indication information and second indication information, the first indication information indicates that relay UE is performing UE-to-network relay communication, and the second indication information indicates that the relay UE is performing UE-to-network relay communication for an emergency service, where the first state indication information is used for determining that a release procedure of a NAS signaling connection of the relay UE is not to be initiated.

Optionally, the transceiver 403 may be further configured to: before transmitting the first state indication information to the relay core network device, receive a release request message transmitted by the relay core network device, where the release request message is used to request to release a NAS signaling connection of the relay UE, and the first state indication information includes the second indication information.

Optionally, the transceiver 403 may be further configured to: after transmitting the first state indication information to the relay core network device, transmit second state indication information to the relay core network device, where the second state indication information is used for determining that the restriction of not initiating a release procedure of a NAS signaling connection of the relay UE is to be removed.

Optionally, the second state indication information includes at least one of third indication information and fourth indication information. The third indication information indicates that the relay UE has completed the UE-to-network relay communication, or indicates that a connection for the UE-to-network relay communication has been released. The fourth indication information indicates that the relay UE has completed the UE-to-network relay communication for the emergency service, or indicates that a connection for the UE-to-network relay communication for the emergency service has been released.

This embodiment of this application provides an access network device, which may specifically be an access network device of relay UE. Because the first indication information may indicate that the relay UE is performing UE-to-network relay communication and the second indication information may indicate that the relay UE is performing UE-to-network relay communication for an emergency service, the access network device can transmit the first state indication information (including the first indication information and/or the second indication information) to the relay core network device to notify the relay core network device that the relay UE is providing a service for remote UE. Therefore, after the relay core network device receives the first state indication information, the relay core network device can determine not to initiate a release procedure of a NAS signaling connection of the relay UE, that is, to retain a NAS signaling connection for the relay UE so that the relay UE can remain in a connected state. This can avoid service interruption of the remote UE, ensuring proper operating of services of the remote UE.

It can be understood that, in this embodiment of this application, the transmitting unit 501 and the receiving unit 502 in the schematic structural diagram (for example, FIG. 10) of the first device may be implemented by the transceiver 403.

In this embodiment of this application, the access network device may be the access network device 05 of the relay UE in the communication system shown in FIG. 1 in the foregoing embodiment.

FIG. 9 is a schematic diagram of hardware of a core network device according to an embodiment of this application. As shown in FIG. 9, the core network device may include one or more processors 401, a memory 402, and a transceiver 403.

In a case that the first device is a core network device (which may specifically be a remote core network device), the transceiver 403 may be configured to transmit first state indication information to a relay core network device, where the first state indication information includes at least one of first indication information and second indication information, the first indication information indicates that relay UE is performing UE-to-network relay communication, and the second indication information indicates that the relay UE is performing UE-to-network relay communication for an emergency service, where the first state indication information is used for determining that a release procedure of a NAS signaling connection of the relay UE is not to be initiated.

Optionally, the transceiver 403 may be configured to: before transmitting the first state indication information to the relay core network device, receive the first state indication information and identifier information of the relay UE that are transmitted by remote UE, and transmit the identifier information of the relay UE and identifier information of the remote UE to the relay core network device.

Optionally, the transceiver 403 may be further configured to: after transmitting the first state indication information to the relay core network device, transmit third state indication information to the relay core network device, where the third state indication information is used for determining whether the restriction of not initiating a release procedure of a NAS signaling connection of the relay UE is to be removed.

Optionally, the third state indication information includes at least one of fifth indication information and sixth indication information. The fifth indication information indicates that the relay UE and the first remote UE have completed UE-to-network relay communication, or indicates that a connection for UE-to-network relay communication between the relay UE and the first remote UE has been released. The sixth indication information indicates that the relay UE and the first remote UE have completed UE-to-network relay communication for an emergency service, or indicates that a connection for UE-to-network relay communication for an emergency service between the relay UE and the first remote UE has been released.

This embodiment of this application provides a core network device, which may specifically be a remote core network device. Because the first indication information may indicate that the relay UE is performing UE-to-network relay communication and the second indication information may indicate that the relay UE is performing UE-to-network relay communication for an emergency service, the remote core network device can transmit the first state indication information (including the first indication information and/or the second indication information) to the relay core network device to notify the relay core network device that the relay UE is providing a service for remote UE. Therefore, after the relay core network device receives the first state indication information, the relay core network device can determine not to initiate a release procedure of a NAS signaling connection of the relay UE, that is, to retain a NAS signaling connection for the relay UE so that the relay UE can remain in a connected state. This can avoid service interruption of the remote UE, ensuring proper operating of a service of the remote UE.

It can be understood that, in this embodiment of this application, the transmitting unit 501 and the receiving unit 502 in the schematic structural diagram (for example, FIG. 10) of the first device may be implemented by the transceiver 403.

In this embodiment of this application, the core network device may be the remote core network device 04 in the communication system shown in FIG. 1 in the foregoing embodiment.

An embodiment of this application further provides a readable storage medium, where the readable storage medium stores a program or instructions, and when the program or instructions are executed by the processor 110 shown in FIG. 11 or the processor 401 shown in FIG. 9, the processes performed by the UE and the network device in the foregoing embodiments of the state indication method are implemented, with the same technical effects achieved. To avoid repetition, details are not described herein again.

The foregoing processor may be a processor in UE or an network device in the foregoing embodiments. The readable storage medium may include a computerreadable storage medium such as a computer read-only memory (read-only memory, ROM), a random access memory (random access memory, RAM), a magnetic disk, or an optical disc.

An embodiment of this application still further provides a chip. The chip includes a processor and a communication interface, where the communication interface is coupled to the processor, and the processor is configured to run a program or instructions, so that the processes in the foregoing embodiments of the state indication method are implemented, with the same technical effects achieved. To avoid repetition, details are not described herein again.

It should be understood that the chip provided in this embodiment of this application may also be referred to as a system-level chip, a system on chip, a chip system, a system-on-a-chip, or the like.

It should be noted that in this specification, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the description of the foregoing implementations, a person skilled in the art can clearly understand that the method in the foregoing embodiments may be implemented by software in addition to a necessary universal hardware platform or by hardware only. In most cases, the former is a more preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A state indication method, wherein the method comprises:
receiving, by a relay core network device, first state indication information transmitted by a first device, wherein the first state indication information comprises at least one of first indication information and second indication information, the first indication information indicates that relay user equipment UE is performing UE-to-network relay communication, and the second indication information indicates that the relay UE is performing UE-to-network relay communication for an emergency service, wherein
the first state indication information is used for determining that a release procedure of a non-access stratum NAS signaling connection of the relay UE is not to be initiated.

2. The method according to claim 1, wherein the first device is the relay UE or an access network device of the relay UE; and
before the receiving, by a relay core network device, first state indication information transmitted by a first device, the method further comprises:
transmitting, by the relay core network device, a release request message to the first device, wherein the release request message is used to request to release a NAS signaling connection of the relay UE.

3. The method according to claim 1, wherein the first device is the relay UE or an access network device of the relay UE; and
after the receiving, by a relay core network device, first state indication information transmitted by a first device, the method further comprises:
storing, by the relay core network device, the first state indication information into a context of the relay UE.

4. The method according to claim 3, wherein the first device is the access network device of the relay UE; and
before the storing, by the relay core network device, the first state indication information into a context of the relay UE, the method further comprises:
receiving, by the relay core network device, identifier information of the relay UE that is transmitted by the access network device.

5. The method according to claim 1, wherein the first device is a remote core network device; and
the method further comprises:
receiving, by the relay core network device, identifier information of the relay UE and identifier information of remote UE that are transmitted by the remote core network device; and
storing, by the relay core network device, the first state indication information and the identifier information of the remote UE into the context of the relay UE.

6. The method according to claim 1, wherein the first device is the relay UE or an access network device of the relay UE; and
after the receiving, by a relay core network device, first state indication information transmitted by a first device, the method further comprises:
receiving, by the relay core network device, second state indication information transmitted by the first device, wherein the second state indication information is used for determining that the restriction of not initiating a release procedure of a NAS signaling connection of the relay UE is to be removed; and
deleting, by the relay core network device, the first state indication information from the context of the relay UE according to the second state indication information.

7. The method according to claim 6, wherein the second state indication information comprises at least one of third indication information and fourth indication information, wherein
the third indication information indicates that the relay UE has completed the UE-to-network relay communication, or indicates that a connection for the UE-to-network relay communication has been released; and
the fourth indication information indicates that the relay UE has completed the UE-to-network relay communication for the emergency service, or indicates that a connection for the UE-to-network relay communication for the emergency service has been released.

8. The method according to claim 1, wherein the first device is a remote core network device; and
after the receiving, by a relay core network device, first state indication information transmitted by a first device, the method further comprises:
receiving, by the relay core network device, third state indication information transmitted by the first device, wherein the third state indication information is used for determining whether the restriction of not initiating a release procedure of a NAS signaling connection of the relay UE is to be removed;
deleting, by the relay core network device, first state indication information corresponding to first remote UE from the context of the relay UE according to the third state indication information; and
if the context of the relay UE further comprises first state indication information corresponding to other remote UE, determining not to remove the restriction of not initiating a release procedure of a NAS signaling connection of the relay UE; or
if the context of the relay UE does not comprise first state indication information corresponding to other remote UE, determining to remove the restriction of not initiating a release procedure of a NAS signaling connection of the relay UE.

9. The method according to claim 8, wherein the third state indication information comprises at least one of fifth indication information and sixth indication information, wherein
the fifth indication information indicates that the relay UE and the first remote UE have completed UE-to-network relay communication, or indicates that a connection for UE-to-network relay communication between the relay UE and the first remote UE has been released; and
the sixth indication information indicates that the relay UE and the first remote UE have completed UE-to-network relay communication for an emergency service, or indicates that a connection for UE-to-network relay communication for an emergency service between the relay UE and the first remote UE has been released.

10. A state indication method, wherein the method comprises:
transmitting, by a first device, first state indication information to a relay core network device, wherein the first state indication information comprises at least one of first indication information and second indication information, the first indication information indicates that relay user equipment UE is performing UE-to-network relay communication, and the second indication information indicates that the relay UE is performing UE-to-network relay communication for an emergency service, wherein
the first state indication information is used for determining that a release procedure of a non-access stratum NAS signaling connection of the relay UE is not to be initiated.

11. The method according to claim 10, wherein the first device is the relay UE or an access network device of the relay UE; and
before the transmitting, by a first device, first state indication information to a relay core network device, the method further comprises:
receiving, by first device, a release request message transmitted by the relay core network device, wherein the release request message is used to request to release a NAS signaling connection of the relay UE, wherein
the first state indication information comprises the second indication information.

12. The method according to claim 10, wherein the first device is a remote core network device; and
before the transmitting, by a first device, first state indication information to a relay core network device, the method further comprises:
receiving, by a remote core network device, first state indication information and identifier information of the relay UE that are transmitted by remote UE; and
transmitting, by the remote core network device, the identifier information of the relay UE and identifier information of the remote UE to the relay core network device.

13. The method according to claim 10, wherein the first device is the relay UE or an access network device of the relay UE; and
after the transmitting, by a first device, first state indication information to a relay core network device, the method further comprises:
transmitting, by the first device, second state indication information to the relay core network device, wherein the second state indication information is used for determining that the restriction of not initiating a release procedure of a NAS signaling connection of the relay UE is to be removed.

14. The method according to claim 13, wherein the second state indication information comprises at least one of third indication information and fourth indication information, wherein
the third indication information indicates that the relay UE has completed the UE-to-network relay communication, or indicates that a connection for the UE-to-network relay communication has been released; and
the fourth indication information indicates that the relay UE has completed the UE-to-network relay communication for the emergency service, or indicates that a connection for the UE-to-network relay communication for the emergency service has been released.

15. The method according to claim 10, wherein the first device is a remote core network device; and
after the transmitting, by a first device, first state indication information to a relay core network device, the method further comprises:
transmitting, by the remote core network device, third state indication information to the relay core network device, wherein the third state indication information is used for determining whether the restriction of not initiating a release procedure of a NAS signaling connection of the relay UE is to be removed.

16. The method according to claim 15, wherein the third state indication information comprises at least one of fifth indication information and sixth indication information, wherein
the fifth indication information indicates that the relay UE and first remote UE have completed UE-to-network relay communication, or indicates that a connection for UE-to-network relay communication between the relay UE and the first remote UE has been released; and
the sixth indication information indicates that the relay UE and the first remote UE have completed UE-to-network relay communication for an emergency service, or indicates that a connection for UE-to-network relay communication for an emergency service between the relay UE and the first remote UE has been released.

17. A core network device, wherein the core network device is a relay core network device, and the core network device comprises a receiving module, wherein
the receiving module is configured to receive first state indication information transmitted by a first device, wherein the first state indication information comprises at least one of first indication information and second indication information, the first indication information indicates that relay user equipment UE is performing UE-to-network relay communication, and the second indication information indicates that the relay UE is performing UE-to-network relay communication for an emergency service, wherein
the first state indication information is used for determining that a release procedure of a non-access stratum NAS signaling connection of the relay UE is not to be initiated.

18. The core network device according to claim 17, wherein the first device is the relay UE or an access network device of the relay UE, and the core network device further comprises a transmitting module, wherein
the transmitting module is configured to: before the receiving module receives the first state indication information transmitted by the first device, transmit a release request message to the first device, wherein the release request message is used to request to release a NAS signaling connection of the relay UE.

19. The core network device according to claim 17, wherein the first device is the relay UE or an access network device of the relay UE, and the core network device further comprises a storage module, wherein
the storage module is configured to: after the receiving module receives the first state indication information transmitted by the first device, store the first state indication information into a context of the relay UE.

20. The core network device according to claim 19, wherein the first device is the access network device of the relay UE; and
the receiving module is further configured to: before the storage module stores the first state indication information into the context of the relay UE, receive identifier information of the relay UE that is transmitted by the access network device.

21. The core network device according to claim 17, wherein the first device is a remote core network device, and the core network device further comprises a storage module, wherein
the receiving module is further configured to receive identifier information of the relay UE and identifier information of remote UE that are transmitted by the remote core network device; and
the storage module is configured to store the first state indication information and the identifier information of the remote UE that are received by the receiving module into the context of the relay UE.

22. The core network device according to claim 17, wherein the first device is the relay UE or an access network device of the relay UE, and the core network device further comprises a deletion module, wherein
the receiving module is further configured to: after receiving the first state indication information transmitted by the first device, receive second state indication information transmitted by the first device, wherein the second state indication information is used for determining that the restriction of not initiating a release procedure of a NAS signaling connection of the relay UE is to be removed; and
the deletion module is configured to delete the first state indication information from the context of the relay UE according to the second state indication information received by the receiving module.

23. The core network device according to claim 22, wherein the second state indication information comprises at least one of third indication information and fourth indication information, wherein
the third indication information indicates that the relay UE has completed the UE-to-network relay communication, or indicates that a connection for the UE-to-network relay communication has been released; and
the fourth indication information indicates that the relay UE has completed the UE-to-network relay communication for the emergency service, or indicates that a connection for the UE-to-network relay communication for the emergency service has been released.

24. The core network device according to claim 17, wherein the first device is a remote core network device, and the core network device further comprises a deletion module and a determining module, wherein
the receiving module is further configured to: after receiving the first state indication information transmitted by the first device, receive third state indication information transmitted by the first device, wherein the third state indication information is used for determining whether the restriction of not initiating a release procedure of a NAS signaling connection of the relay UE is to be removed;
the deletion module is configured to delete first state indication information corresponding to first remote UE from the context of the relay UE according to the third state indication information; and
the determining module is configured to: after the deletion module deletes the first state indication information corresponding to the first remote UE, in a case that the context of the relay UE further comprises first state indication information corresponding to other remote UE, determine that the restriction of not initiating a release procedure of a NAS signaling connection of the relay UE is not to be removed; or in a case that the context of the relay UE does not comprise first state indication information corresponding to other remote UE, determine that the restriction of not initiating a release procedure of a NAS signaling connection of the relay UE is to be removed.

25. The core network device according to claim 24, wherein the third state indication information comprises at least one of fifth indication information and sixth indication information, wherein
the fifth indication information indicates that the relay UE and the first remote UE have completed UE-to-network relay communication, or indicates that a connection for UE-to-network relay communication between the relay UE and the first remote UE has been released; and
the sixth indication information indicates that the relay UE and the first remote UE have completed UE-to-network relay communication for an emergency service, or indicates that a connection for UE-to-network relay communication for an emergency service between the relay UE and the first remote UE has been released.

26. A device, wherein the device is a first device, and the first device comprises a transmitting unit, wherein
the transmitting unit is configured to transmit first state indication information to a relay core network device, wherein the first state indication information comprises at least one of first indication information and second indication information, the first indication information indicates that relay user equipment UE is performing UE-to-network relay communication, and the second indication information indicates that the relay UE is performing UE-to-network relay communication for an emergency service, wherein
the first state indication information is used for determining that a release procedure of a non-access stratum NAS signaling connection of the relay UE is not to be initiated.

27. The device according to claim 26, wherein the first device is the relay UE or an access network device of the relay UE, and the first device further comprises a receiving unit, wherein
the receiving unit is configured to: before the transmitting unit transmits the first state indication information to the relay core network device, receive a release request message transmitted by the relay core network device, wherein the release request message is used to request to release a NAS signaling connection of the relay UE, wherein
the first state indication information comprises the second indication information.

28. The device according to claim 26, wherein the first device is a remote core network device; and
the first device further comprises a receiving unit, wherein
the receiving unit is configured to: before the transmitting unit transmits the first state indication information to the relay core network device, receive the first state indication information and identifier information of the relay UE that are transmitted by remote UE; and
the transmitting unit is further configured to transmit the identifier information of the relay UE and identifier information of the remote UE to the relay core network device.

29. The device according to claim 26, wherein the first device is the relay UE or an access network device of the relay UE; and
the transmitting unit is further configured to: after transmitting the first state indication information to the relay core network device, transmit second state indication information to the relay core network device, wherein the second state indication information is used for determining that the restriction of not initiating a release procedure of a NAS signaling connection of the relay UE is to be removed.

30. The device according to claim 29, wherein the second state indication information comprises at least one of third indication information and fourth indication information, wherein
the third indication information indicates that the relay UE has completed the UE-to-network relay communication, or indicates that a connection for the UE-to-network relay communication has been released; and
the fourth indication information indicates that the relay UE has completed the UE-to-network relay communication for the emergency service, or indicates that a connection for the UE-to-network relay communication for the emergency service has been released.

31. The device according to claim 26, wherein the first device is a remote core network device; and
the transmitting unit is further configured to: after transmitting the first state indication information to the relay core network device, transmit third state indication information to the relay core network device, wherein the third state indication information is used for determining whether the restriction of not initiating a release procedure of a NAS signaling connection of the relay UE is to be removed.

32. The device according to claim 31, wherein the third state indication information comprises at least one of fifth indication information and sixth indication information, wherein
the fifth indication information indicates that the relay UE and first remote UE have completed UE-to-network relay communication, or indicates that a connection for UE-to-network relay communication between the relay UE and the first remote UE has been released; and
the sixth indication information indicates that the relay UE and the first remote UE have completed UE-to-network relay communication for an emergency service, or indicates that a connection for UE-to-network relay communication for an emergency service between the relay UE and the first remote UE has been released.

33. A core network device, comprising a processor, a memory, and a program or instructions stored in the memory and capable of running on the processor, wherein when the program or instructions are executed by the processor, the steps of the state indication method according to any one of claims 1 to 9 are implemented.

34. A device, comprising a processor, a memory, and a program or instructions stored in the memory and capable of running on the processor, wherein when the program or instructions are executed by the processor, the steps of the state indication method according to any one of claims 10 to 16 are implemented.

35. A communication system, comprising the core network device according to any one of claims 17 to 25 and the device according to any one of claims 26 to 32; or
the communication system comprises the core network device according to claim 33 and the device according to claim 34.

36. A readable storage medium, wherein the readable storage medium stores a program or instructions, and when the program or the instructions are executed by a processor, the steps of the state indication method according to any one of claims 1 to 16 are implemented.

37. A computer program product, wherein the computer program product is executed by at least one processor to implement the state indication method according to any one of claims 1 to 16.

38. A core network device, wherein the core network device is configured to perform the steps of the state indication method according to any one of claims 1 to 9.

39. A device, wherein the device is configured to perform the steps of the state indication method according to any one of claims 10 to 16.
